# EUROPÄISCHE PATENTANMELDUNG

(11) **EP 1 016 571 A2**
(43) Veröffentlichungstag der Anmeldung: **05.07.2000**
(21) Anmeldenummer: 99123063.2
(22) Anmeldetag: 20.11.1999
(51) Int. Cl.: B60S 1/38

(54) **Scheibenwischer**

(30) Priorität: 28.12.1998 DE 19860469; 28.09.1999 DE 19946353
(71) Anmelder: ROBERT BOSCH GMBH, 70442 Stuttgart (DE)
(72) Erfinder: Desmet, Steven, 8310 Assebroek (BE); Aerts, Karel, 3200 Aarschot (BE); Criel, Paul, 3800 St. Truiden (BE); Verelst, Hubert, 3300 Tienen (BE)

(57) **Zusammenfassung**

Scheibenwischer für Scheiben (16) von Kraftfahrzeugen mit einem Wischblatt (10), das ein mehrgliedriges Gestell (18) hat, an welchem ein auf der Scheibe (16) angelegtes Wischelement (12) gehalten ist und das Gestell (18) einen übergeordneten, im Querschnitt im wesentlichen U-förmigen Bügel (20) aufweist, an dessen zumindest einem Ende ein zwischen die U-Schenkel des übergeordneten Bügels (20) eintauchender, untergeordneter U-förmiger Bügel (22) waagebalkenartig angelegt ist. Die über- oder untergeordnete Bügel (20, 22) weisen Mittel auf, die eine Gelenkfunktion ermöglichen. Es wird vorgeschlagen, daß die über- und untergeordnete Bügel (20, 22) oberflächengehärtet sind.

## Beschreibung

### Stand der Technik

Die Erfindung betrifft einen Scheibenwischer nach der Gattung des Hauptanspruchs. Bei einem derartigen, aus der DE-OS 21 25 367 bekannten Scheibenwischer wird ein von einem Wischerarm erzeugter Anpressdruck über ein mehrgliedriges Tragbügelgestell auf eine Wischleiste übertragen. Das Tragbügelgestell umfaßt übergeordnete und untergeordnete Bügel, die gelenkig miteinander verbunden sind und die es der Streifleiste ermöglichen, einer gewölbten Windschutzscheibenform zu folgen. Die über- und untergeordneten Bügel sind über Gelenke miteinander verbunden, die im Falle der DE-OS 21 25 367 durch einfache am übergeordneten Bügel angebrachte Laschen, die den untergeordneten Bügel untergreifen und verrutschsicher in eine Vertiefung eingreifen, realisiert sind. Um störende Klappergeräusche zu verhindern, sind ferner am übergeordneten Bügel nach innen weisende Ausstülpungen eingebracht, die sich an der Außenseite des untergeordneten Bügels abstützen.

Die Gelenkfunktion wird bei dieser Konstruktion nur ungenügend bereitgestellt, weil durch die laterale Ausdehnung der untergreif enden Lappen ein Verhaken nicht immer sicher vermieden werden kann. Außerdem ist der Drehpunkt im Bereich der umgreifenden Lappen zu den Ausstülpungen örtlich versetzt, so daß die Oberflächen der Bügel im Gelenkbereich angegriffen und damit einer erhöhten Korrosion ausgesetzt werden. Um diese Nachteile zu verhindern, ist es bekannt, über- und untergeordnete Bügel über einen Gelenkstift, der in einem Kunststoffzwischenstück gelagert ist, miteinander zu verbinden. Dadurch erhöht sich jedoch die Komplexibilität und der Montageaufwand des Gelenks.

### Vorteile der Erfindung

Der erfindungsgemäße Scheibenwischer mit den Merkmalen des Hauptanspruchs hat den Vorteil, daß die Gelenkfunktion die Qualität eines Gelenks mit einem Gelenkstift erreicht, obwohl kein Stift benötigt und damit ein einfaches System erhalten wird. Ferner sind die Gleiteigenschaften durch die Oberflächenqualität verbessert und die Angreifbarkeit der Oberflächen gegenüber Verkratzen und gegenüber weiteren Umwelteinflüssen vermindert.

Durch die in den Unteransprüchen aufgeführten Merkmale sind weitere vorteilhafte Ausgestaltungen des Scheibenwischers nach dem Hauptanspruch möglich.

### Zeichnung

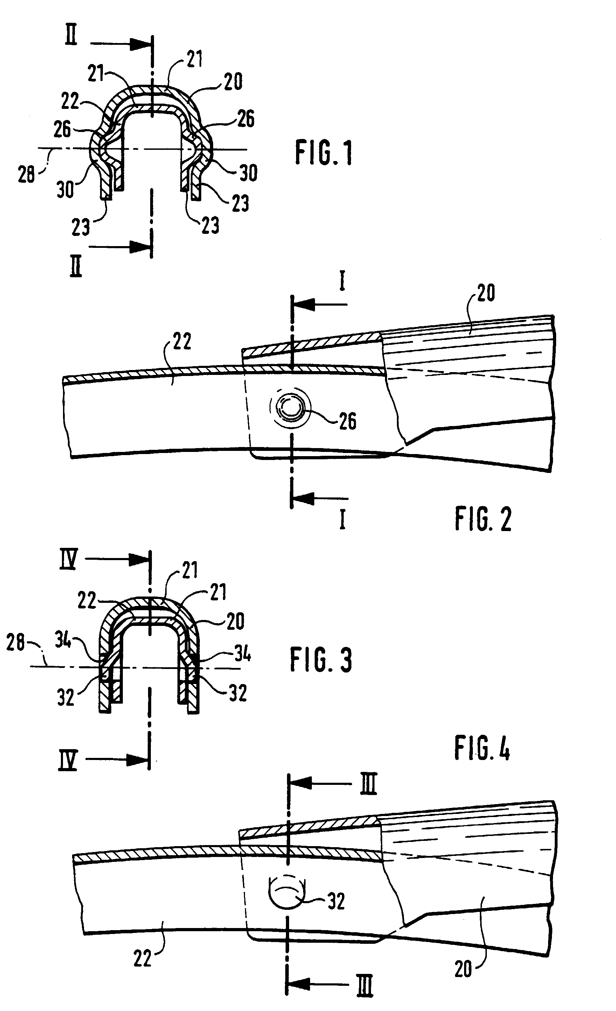

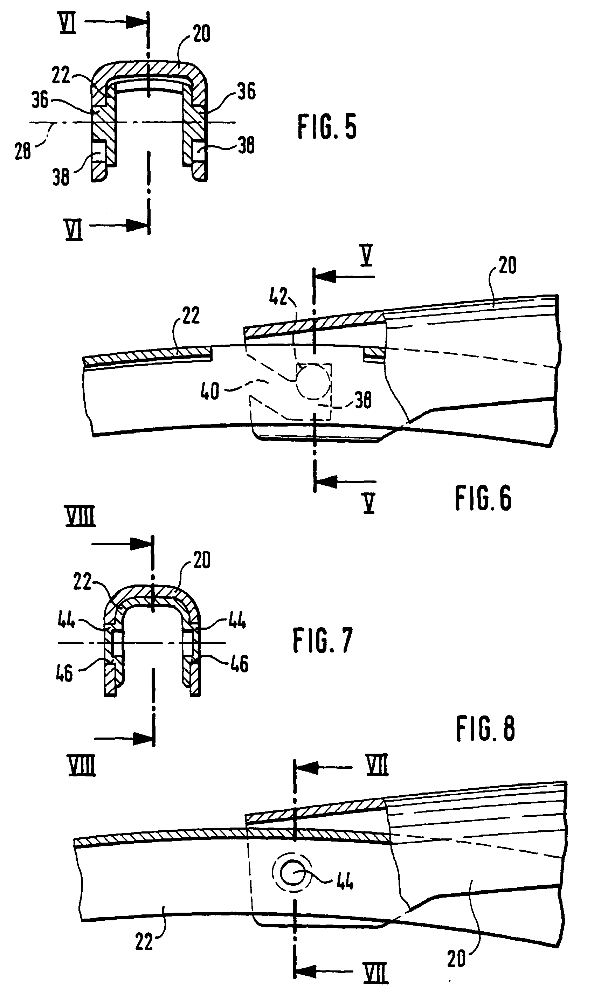

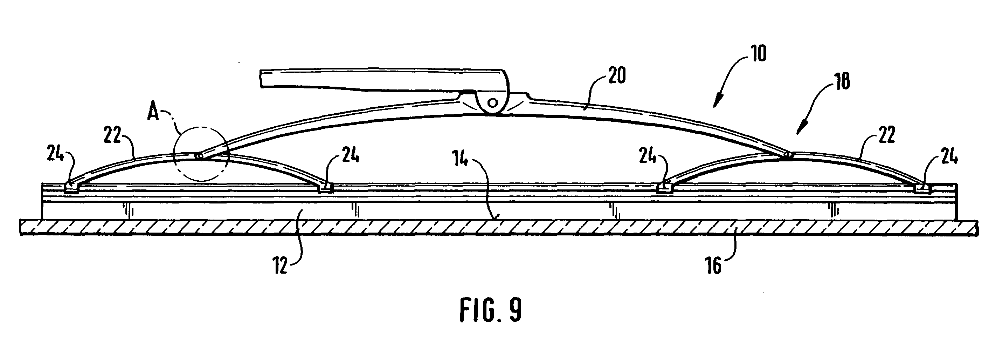

In der Zeichnung sind vier Ausführungsbeispiele des Scheibenwischers dargestellt und in der nachfolgenden Beschreibung näher erläutert. Es zeigen Figur 1 ein erstes Ausführungsbeispiel im Schnitt nach Linie I-I in Figur 2, Figur 2 ein Schnitt nach Linie II-II in Figur 1, Figur 3 ein zweites Ausführungsbeispiel im Schnitt nach Linie III-III in Figur 4, Figur 4 ein Schnitt nach Linie IV-IV in Figur 3, Figur 5 ein drittes Ausführungsbeispiel im Schnitt nach V-V in Figur 6, Figur 6 einen Schnitt nach Linie VI-VI in Figur 5, Figur 7 ein viertes Ausführungsbeispiel im Schnitt nach Linie VII-VII in Figur 8, Figur 8 einen Schnitt nach Linie VIII-VIII in Figur 7 und Figur 9 ein Scheibenwischer in Arbeitsstellung.

### Beschreibung

Ein in Figur 9 dargestelltes Wischblatt 10 liegt mit einer Wischleiste 12 auf der einen, äußeren Oberfläche 14 einer zu wischenden Scheibe 16 eines Kraftfahrzeuges an. Das Wischblatt 10 hat ein Tragbügelgestell 18, mit einem übergeordneten Ober- oder Hauptbügel 20, an dessen beiden Enden jeweils ein untergeordneten Unter- oder Krallenbügel 22 waagebalkenartig angelenkt ist. Die beiden untergeordneten Bügel im folgenden Unterbügel genannt, halten mit krallenartigen Fortsätzen 24 die Wischleiste 12. Im folgenden soll auf die Gelenkverbindung zwischen dem übergeordneten im folgenden Oberbügel 20 geannnt, und einem der Unterbügel 22 näher eingegangen werden. Einer dieser Gelenkbereiche ist in Figur 9 mit A bezeichnet und in den Figuren 2, 4, 6 und 8 für jedes Ausführungsbeispiel dargestellt. Es können hier jedoch auch weitere Zwischenbügel angeordnet sein, deren Gelenkstruktur dann ebenfalls gemäß A ausgelegt wäre.

Die Ober- und Unterbügel 20, 22 weisen im Querschnitt eine U-förmige Gestalt auf, wobei eine U-Basis 21 zwei Seitenwangen 23 miteinander verbindet. Die die Gelenkfunktion erzeugenden Mittel sind in den Seitenwangen 23 im Bereich einer virtuellen Gelenkachse 28 angeordnet.

In den nachfolgenden, die einzelnen Ausführungsbeispiele beleuchtenden Absätzen sind gleiche Teile mit gleichen Bezugszahlen belegt und jeweils nur die Unterschiede beschrieben.

Im ersten Ausführungsbeispiel weist der Unterbügel 22 im Bereich des Gelenkes zwei nach außen weisende Ausstülpungen 26 auf, die sich bezogen auf eine virtuelle Gelenkachse 28 gegenüber liegen. Der Oberbügel 20 weist im gleichen Bereich ebenfalls nach außen gerichtete Ausstülpungen 30 auf, die sich bezogen auf die Gelenkachse 28 gegenüber liegen und in deren konkaven Innenseiten die konvexe Außenseiten der Ausstülpungen 26 aufgenommen sind. Ein Gelenkstift wird damit durch das Ineinandergreifen der Ausstülpungen 26 und 30 ersetzt.

Im zweiten Ausführungsbeispiel gemäß den Figuren 3 und 4 weist der Unterbügel 22 zwei kreisförmig ausgestanzte und ausgestellte Blechlappen 32 auf, die sich bezogen auf die Gelenkachse 28 gegenüber liegen. Der Oberbügel 20 weist im Bereich der Gelenkachse 28 zwei kreisrunde Aussparungen 34 auf, die in Montagestellung die Blechlappen 32 aufnehmen.

Die Montage des Scheibenwischers nach dem ersten oder zweiten Ausführungsbeispiel gelingt einfach dadurch, daß der Oberbügel 20 über den Unterbügel 22 geschoben und durch eine schräg andeutende Form der Ausstülpungen 26 bzw. der Blechlappen 32 ein leichtes Aufbiegen des Oberbügels 20 bzw. ein leichtes Zusammendrücken des Unterbügeis 22 erreicht wird. In der Endstellung sind die Ausstülpungen 26, 30 bzw. die Blechlappen 32 und die Aussparungen 34 drehbar miteinander verrastet.

Im dritten Ausführungsbeispiel nach den Figuren 5 und 6 besitzt der Unterbügel 22 geprägte, nach außen weisende Noppen 36, die in Aussparungen 38 im Oberbügel eingreifen. Die Aussparung 38 weist einen zum äußeren Ende des Oberbügeis 20 offenen Kanal 40 auf, der im Bereich der aufgenommenen Noppen 36 so abgeknickt ist, daß eine die Noppen 36 zumindest dreiseitig umfassende Ausnehmung 42 entsteht. Die Montage dieses Gelenks gelingt, indem die Noppen 36 über den Kanal 40 bis zu den Ausnehmungen 42 der Aussparung 30 geführt werden.

Im letzten Ausführungsbeispiel nach den Figuren 7 und 8 ist verdeutlicht, daß auch Variationen der bislang aufgeführten Ausführungsbeispiele möglich sind. So sind hier im Unterbügel 22 nach außen gedrückte Ausstülpungen 44 dargestellt, die in kreisrunde Aussparungen 46 eingreifen. Im Unterschied zum ersten Ausführungsbeispiel sind die Ausstülpungen 44 von eher zylindrischer Querschnittsgestalt, so daß sich eine exakte Führung in den Aussparungen 46 ergibt.

Die ober- und untergeordneten Bügel 20, 22 sind aus gestanztem und gebogenem Stahlblech hergestellt, das einem Oberflächenhärteverfahren unterzogen wurde.

Als Härteverfahren eignet sich insbesondere ein Nitrierhärten, das nach der Formgebung der Bügel eingesetzt wird. Das Nitrierhärten hat neben dem Vorteil einer nur sehr kleinen formbeeinflussenden Wirkung den weiteren Vorteil, daß die Oberfläche korrosionsbeständig ist und ohne weitere Lackierung auskommt. Aufgrund der höheren Härte können die Ober- und Unterbügel 20, 22 direkt miteinander bewegbar in Kontakt sein. Ein Verkratzen der Oberfläche ist zumindest über die Lebensdauer des Wischers unterbunden.

Die Kombination der oberflächengehärteten, insbesondere nitrierten Stahlbügelteile mit den besonders ausgestalteten Gelenkvariationen ergibt ein kostengünstiges, äußerst robustes und einfach zu montierendes Tragbügelgestell 18 eines Wischblatts 10 eines Scheibenwischers.

## Patentansprüche

1. Wischvorrichtung für Scheiben von Kraftfahrzeugen mit einem Wischblatt mit einem mehrgliedrigen Gestell, an welchem ein auf der Scheibe anlegbares Wischelement gehalten ist, wobei das Gestell einen übergeordneten, im Querschnitt im wesentlichen U-förmigen Bügel aufweist, an dessen zumindest einem Ende ein zwischen die U-Schenkel des übergeordneten Bügels eintauchender, untergeordneter U-förmiger Bügel waagebalkenartig angelenkt ist und wobei an mindestens einem Über- und untergeordneten Bügel eine eine Gelenkfunktion ermöglichende Einrichtung ausgebildet ist, dadurch gekennzeichnet, daß die über- und untergeordnete Bügel (20, 22) oberflächengehärtet sind.

2. Scheibenwischer nach Anspruch 1, dadurch gekennzeichnet, daß die über- und untergeordnete Bügel (20, 22) nitriergehärtet sind.

3. Scheibenwischer nach einem der vorhergehenden Ansprüche, dadurch gekennzeichnet, daß der untergeordnete Bügel (22) nach außen weisende, innere Ausstülpungen (26) aufweist, die mit ihrer Außenseite in Aussparungen (46) und/oder äußere Ausstülpungen (30) des übergeordneten Bügels (20) eingreifen.

4. Scheibenwischer nach einem der Ansprüche 1 oder 2, dadurch gekennzeichnet, daß der untergeordnete Bügel (22) nach außen ausgestellte Blechlappen (32) aufweist, die in Aussparungen (34) und/oder Ausstülpungen (30) des übergeordneten Bügels (20) eingreifen.

5. Scheibenwischer nach einem der Ansprüche 1 oder 2, dadurch gekennzeichnet, daß der untergeordnete Bügel (22) nach außen weisende Noppen (36) aufweist, die in Aussparungen (38) im übergeordneten Bügel (20) eingreifen.

6. Scheibenwischer nach Anspruch 5, dadurch gekennzeichnet, daß jede Aussparung (30) einen zum Ende des übergeordneten Bügels (20) offenen Kanal (40) und eine abgeknickte Ausnehmung (42) aufweist, die die Noppen (36) zumindest dreiseitig umfaßt.
